# EUROPÄISCHE PATENTSCHRIFT

(11) **EP 1 702 772 B1**
(45) Veröffentlichungstag und Bekanntmachung des Hinweises auf die Patenterteilung: **24.08.2011**
(21) Anmeldenummer: 06005020.0
(22) Anmeldetag: 11.03.2006
(51) Int. Cl.: B60G 17/017, B60G 17/019, B60G 17/08, B62D 33/06

(54) **Anordnung und Verfahren zur Niveausteuerung bzw. -regelung eines Fahrzeugaufbaus**
Arrangement and method for the height- control or regulation of the structure of a vehicle
Arrangement et procédé pour le contrôle ou le réglage en hauteur de la structure d'un véhicule

(30) Priorität: 18.03.2005 DE 102005012673
(43) Veröffentlichungstag der Anmeldung: 20.09.2006
(73) Patentinhaber: MAN Truck & Bus AG, 80995 München (DE)
(72) Erfinder: Gerritzen, Ralph, Dipl.-Ing., 82110 Germering (DE); Mendler, Hardy, Dipl.-Ing., 85221 Dachau (DE); Nickels, Thomas, Dipl.-Ing., 81541 München (DE)

(56) Entgegenhaltungen:
- EP-A- 0 884 595
- EP-A- 0 994 009
- EP-A- 1 419 956
- US-A- 5 347 457
- US-A- 5 530 648
- US-A- 5 555 501
- US-A- 5 623 410
- US-A- 6 029 764
- US-A- 6 067 491
- US-A- 6 070 681
- PATENT ABSTRACTS OF JAPAN Bd. 018, Nr. 386 (M-1641), 20. Juli 1994 (1994-07-20) & JP 06 107241 A (ISUZU MOTORS LTD), 19. April 1994 (1994-04-19)

## Beschreibung

Die vorliegende Erfindung betrifft eine Anordnung zur Niveausteuerung bzw. -regelung eines Fahrzeugaufbaus sowie ein entsprechendes Verfahren zur Niveausteuerung bzw. -regelung.

Anordnungen zur Niveauausgleichssteuerung von Fahrzeugen dienen in erster Linie dazu, Aufbauneigungen aufgrund von unterschiedlichen Beladungszuständen auszugleichen. Normalerweise dienen hierzu variabel ansteuerbare Tragelemente an der bei Beladung vorrangig belasteten Fahrzeugachse, typischerweise die Hinterachse. Derartige Niveausteuerungssysteme sind sowohl aus dem Personenfahrzeugbau als auch aus dem Nutzfahrzeugbau bekannt. Als Eingangsgröße zur Ansteuerung einer Niveaulage dient üblicherweise ein Wegsensor an einer Fahrzeughinterachse, der das bei stärkerer Beladung des Fahrzeugs zunehmende Absinken des Fahrzeughecks erfasst und ein entsprechendes Wegsignal an eine Steuereinrichtung liefert. Auf Basis dieses Wegsignals können mittels manueller oder automatischer Steuerung Tragelemente an der Hinterachse stärker vorgespannt bzw. mit stärkerem Druck beaufschlagt werden, um das Fahrzeugniveau wieder annähernd in die Horizontale zu bringen.

Ähnliche Steuerungen sind zur Niveauregulierung von Nutzfahrzeugkabinen bekannt, insbesondere zur Komfortsteigerung während des Stillstandes des Fahrzeugs auf geneigtem Untergrund. In diesen Fällen kann es von Vorteil sein, die Tragelemente, auf denen die Fahrerkabine gegenüber dem Nutzfahrzeugrahmen abgestützt ist, so anzusteuern, dass für einen sog. Schlafmodus ein weitgehend horizontales Niveau der Fahrerkabine eingestellt werden kann.

Weiterhin sind Systeme zur Niveauregulierung und/oder Federung- bzw. Dämpfungsregelung von Fahrerkabinen landwirtschaftlicher Zugmaschinen bekannt. So beschreibt die EP 0 994 009 B1 eine Aufhängung für ein Führerhaus einer landwirtschaftlichen Maschine, die mehrere Tragelemente umfasst. Auf Basis eines oder zwei am Führerhaus angeordneter Neigungssensoren wird eine aktuelle Neigung des Führerhauses gegenüber einer horizontalen Bezugsrichtung erfasst, woraus Steuersignale zur Ansteuerung der Tragelemente abgeleitet werden.

Weitere Systeme zur aktiven Federung von Fahrerkabinen von Nutzfahrzeugen bzw. von landwirtschaftlichen Zugmaschinen sind aus der US 60 70 681 A, aus der US 50 44 455 A, aus der US 56 23 410 A sowie aus der DE 43 21 152 A1 bekannt.

Aus der US 6 029 764 A ist ein aktives Dämpfungssystem für eine landwirtschaftliche Zugmaschine bekannt. Bei diesem System werden Tragelemente einer Fahrerkabine auf Grundlage der Messsignale eines zwischen Fahrzeugrahmen und Fahrzeugaufbau angeordneten Wegsensors sowie eines Neigungssensors derart angesteuert, dass Vibrationen und Schrägstellungen des Fahrgestells von der Kabine ferngehalten werden können.

Die US 5 530 648 A offenbart ein System zur Niveaujustierung eines Fahrzeugaufbaus, bei dem mittels einer Ansteuerung von Dämpfungselementen eines Fahrwerks die für den Fahrer wirksamen Lenkkräfte reduziert und der Geradeauslauf des Fahrzeugs verbessert werden sollen.

Ein vorrangiges Ziel der Erfindung besteht darin, eine Anordnung sowie ein Verfahren zur Niveauregulierung eines Fahrzeugaufbaus zur Verfügung zu stellen, die auf möglichst einfache Weise und mit geringem Sensor- bzw. Rechenaufwand einen effektiven Steuer- bzw. Regelalgorithmus bieten können.

Dieses Ziel der Erfindung wird mit den Gegenständen der unabhängigen Patentansprüche erreicht. Merkmale vorteilhafter Weiterbildungen der Erfindungen ergeben sich aus den abhängigen Ansprüchen.

Eine erfindungsgemäße Anordnung zur Niveausteuerung und/oder -regelung zumindest eines Teils eines Fahrzeugaufbau gegenüber einem Fahrzeugrahmen und/oder gegenüber einem Fahrwerk mit den Merkmalen des unabhängigen Anspruchs 1 sieht einen Neigungssensor vor, der eine Neigung des Fahrzeugaufbaus und/oder des Fahrzeugrahmens gegenüber einer horizontalen Nulllage erfasst und einer Steuereinrichtung als Messwert liefert. Auf Basis des Sensorsignals des Neigungssensors sowie eines Signals eines Wegsensors an einem von mehreren Tragelementen des Fahrzeugs kann eine Niveauregulierung sowohl während des Stillstandes des Fahrzeugs als auch während dessen Bewegung erfolgen. Während des Stillstandes des Fahrzeugs kann die Niveauregulierung insbesondere zur Realisierung eines Schlafmodus dienen, bei dem es wünschenswert ist, dass die Fahrerkabine weitgehend horizontal ausgerichtet ist, um dem Benutzer einen größtmöglichen Aufenthalts- bzw. Schlafkomfort zu bieten. Wenn im vorliegenden Zusammenhang von Tragelementen die Rede ist, so können damit einerseits die zwischen Fahrerkabine und Fahrzeugrahmen angeordneten Aufhängungsetemente als auch die zwischen Fahrzeugrahmen und Achsen angeordneten Feder- bzw. Aufhängungselemente gemeint sein. Beide Arten von Aufhängungselementen sind bei Nutzfahrzeugen üblicherweise als fluidisch wirkende Tragelement bzw. als Luftfederbälge o. dgl. ausgebildet. Die fluidisch wirkenden Tragelemente zwischen Achsen und Rahmen bzw. zwischen Rahmen und Kabine können mittels einer automatischen Steuerung in ihrem Hub eingestellt werden.

Weiterhin kann vorgesehen sein, dass die Niveauregulierung des Fahrzeugrahmens gegenüber dem Fahrwerk einen Ausgleich von unterschiedlichen Beladungszuständen vorsieht.

Auf diese Weise kann ein Absinken des Rahmens gegenüber den auf der Fahrbahn aufliegenden Rädern durch starke Kompression von Tragelementen aufgrund einer hohen Fahrzeugbelastung ausgeglichen werden, was insbesondere bei Nutzfahrzeugen mit einer hohen Nutzlast vorteilhaft hinsichtlich der Federungseigenschaften sowie der Fahrstabilität bei leerem und auch bei beladenem Fahrzeug ist. Zudem vermag das System einen Ausgleich einer Schrägstellung des Fahrzeugaufbaus aufgrund einer ungünstigen, einseitigen Beladung zu schaffen, ebenso wie einen Ausgleich eines geneigten Fahrzeugaufbaus aufgrund des Befahrens einer seitlich und/oder in Fahrtrichtung geneigten Fahrbahn.

Eine vorteilhafte Ausgestaltung der Erfindung sieht vor, dass die Niveauregulierung der Fahrerkabine und/oder des Fahrzeugsrahmens einen zusätzlichen Wank- und/oder Nickausgleich während der Fahrt vorsieht. Hierzu können die Dämpfungselemente mittels einer automatischen Steuerung in ihrer Dämpfungscharakteristik einstellbar sein. Vorzugsweise erfolgt die Niveauregulierung der Fahrerkabine und/oder des Fahrzeugrahmens als auch die Dämpfungsregulierung mittels eines geeigneten Trägheitsalgorithmus, insbesondere mit Hilfe eines sog. Fuzzy-Algorithmus, da eine gewisse Trägheit des Systems wünschenswert ist, um bspw. zu schnelle Regelungen bei sich ständig verändernden Fahrbahnbedingungen und damit ein Aufschaukeln bzw. Resonanzschwingungen der Kabine bzw. des Rahmens zu verhindern.

Die erfindungsgemäße Anordnung lässt sich in vorteilhafter Weise bereits dann realisieren, wenn jeweils ein Neigungssensor an der Fahrerkabine und/oder am Fahrzeugrahmen vorgesehen ist. Zusätzlich reicht es aus, wenn jeweils ein Wegsensor an wenigstens einem Tragelement der Fahrerkabine und/oder an wenigstens einer Achse des Fahrzeugs angeordnet ist. Gegebenenfalls kann jeweils ein Wegsensor an einer Vorderachse und an einer Hinterachse des Fahrzeugs angeordnet sein, was bspw. bei Fahrzeugen mit längerem Radstand wie Kraftomnibussen oder dergleichen von Vorteil sein kann. Mit einer solchen Sensorausstattung kann bspw. auch ein Absinken eines beladenen Fahrzeugs mit relativ langem Radstand an der Hinterachse zuverlässig von einem um die Querachse geneigten Fahrzeug aufgrund einer ansteigenden oder abfallenden Fahrbahn unterschieden werden.

Weiterhin betrifft die Erfindung ein Verfahren zur Niveausteuerung und/oder -regelung mit den Merkmalen des unabhängigen Anspruchs 9, bei dem die Signale wenigstens eines Neigungssensor ausgewertet werden, der eine Neigung des Fahrzeugaufbaus und/oder des Fahrzeugrahmens gegenüber einer Nuillage erfasst und der Steuereinrichtung als Messwert liefert. Die zu dem o.g. Ausführungsformen erwähnten Aspekte und Vorteile beziehen sich sowohl auf das erfindungsgemäße Verfahren in all seinen Ausgestaltungen als auch auf die erfindungsgemäße Steueranordnung. Weitere Merkmale und Vorteile der Erfindung lassen sich den jeweiligen abhängigen Ansprüchen entnehmen.

Die Erfindung wird nachfolgend anhand eines bevorzugten Ausführungsbeispiels unter Bezugnahme auf die beiliegenden Zeichnungen näher erläutert.
- Figur 1: zeigt eine schematische Darstellung eines Nutzfahrzeugs in Frontlenkerbauweise, das eine über eine Vorderachse angeordnete Fahrerkabine ausweist.
- Figur 2: zeigt in einer schematischen Darstellung eine erste Variante einer erfindungsgemäßen Steueranordnung zur Niveauregulierung eines Nutzfahrzeugaufbaus.
- Figur 3: zeigt in einer schematischen Darstellung eine zweite Variante einer erfindungsgemäßen Steueranordnung zur Niveauregulierung eines Nutzfahrzeugaufbaus und/oder -rahmens.
- Figur 4: zeigt in einer schematischen Darstellung eine dritte Variante einer erfindungsgemäßen Steueranordnung zur Niveauregulierung eines Nutzfahrzeugaufbaus und/oder - rahmens.
- Figur 5: zeigt ein schematisches Blockschaltbild zur Verdeutlichung einer Ansteuerung der erfindungsgemäßen Niveauregelungsschaltung.

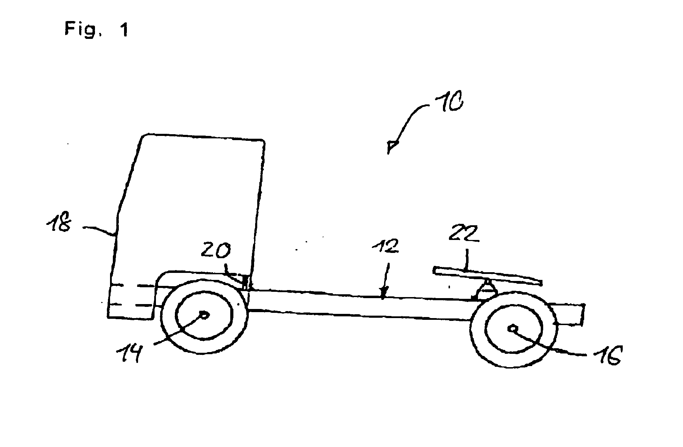

Die schematische Darstellung der Figur 1 zeigt eine Sattelzugmaschine in sog. Frontlenkerbauweise, die im Folgenden allgemein als Nutzfahrzeug 10 bezeichnet wird. Die Erfindung ist jedoch keineswegs auf derartige Frontlenkerfahrzeuge beschränkt, sondern lässt sich in gleicher Weise an sogenannten Haubenfahrzeugen realisieren, bei denen die Fahrerkabine hinter einem Antriebsmotor angeordnet ist. Als Nutzfahrzeug 10 kommen darüber hinaus auch viele andere Ausführungsvarianten in Frage, bspw. landwirtschaftliche Zugmaschinen oder schienengebundene Fahrzeuge, aber auch Busse und andere Personenbeförderungsfahrzeuge. Das Nutzfahrzeug 10 kann einen anderen Aufbau aufweisen, als den gezeigten. So kann es bspw. Tandemachse vorne und/oder hinten oder hintere Drillingsachsen aufweisen. Die erfindungsgemäße Aufhängung kann in vorteilhafter Weise bei allen denkbaren Nutzfahrzeug- und Sonderfahrzeugvarianten eingesetzt werden.
aufweisen kann. Am Fahrgestellrahmen 12 sind jeweils Aufhängungselemente (nicht dargestellt) für eine Vorderachse 14 sowie für eine Hinterachse 16 angeordnet. Eine Fahrerkabine 18 ist über mehrere Tragelemente 20 gefedert und/oder gedämpft mit dem Fahrgestellrahmen 12 verbunden. Wenn im vorliegenden Zusammenhang allgemein von Tragelementen 20 die Rede ist, so ist damit grundsätzlich ein fluidisch wirkendes Element gemeint, bspw. ein Luftfeder-Dämpfungsmodul, bei dem Luftfedern und hydraulische bzw. pneumatische Dämpfungselemente in kombiniertere Bauweise zusammengefasst sind. Zusätzlich können die Tragelemente 20 noch mit geeigneten integrierten Wegsensoren versehen sein, die eine Auslenkung zumindest eines der Tragelemente 20 mittels Ultraschallauswertung oder dergleichen erfassen und daraus ein Sensorsignal bilden können. Wahlweise können die Wegsensoren auch eine induktive Erfassung oder eine anders gestaltete Erfassung der Auslenkung vorsehen.

Typisch für die Frontlenkerbauweise des Nutzfahrzeugs 10 ist, dass die Fahrerkabine 18 über der Vorderachse 14 angeordnet ist. Das in Figur 1 dargestellte Nutzfahrzeug 10 ist als Zugfahrzeug ausgestaltet, bei dem im Bereich der Hinterachse 16 ein Kupplungselement 22 für einen Aufliegeanhänger (nicht dargestellt) angeordnet ist.

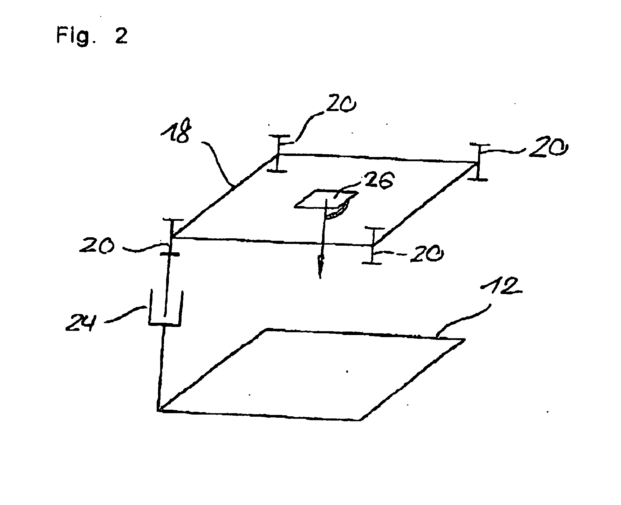

Bei einem Stillstand des Nutzfahrzeugs 10 kann die Fahrerkabine 18 als Ruheraum für einen Fahrer genutzt werden, wenn dieser bspw. Ruhe- oder Übernachtungspausen einlegt. Hierbei kann es vorkommen, dass das Nutzfahrzeug 10 auf geneigtem oder unebenem Untergrund steht, so dass die Fahrerkabine bei gleichmäßig mit fluidischem Druck beaufschlagten Tragelementen 20 nicht horizontal ausgerichtet ist. Dies kann zur Komforteinbußen für den ruhenden Fahrer führen. Ein weiteres Problem hinsichtlich eines optimalen Ruhekomforts kann dadurch entstehen, dass die gefedert und/oder gedämpft abgestützte Fahrerkabine 18 bei Windböen und/oder bei Windeinflüssen durch vorbeifahrende Fahrzeuge oder dergleichen ins Schwanken geraten kann. Derartige Schwankungen können auch durch Bewegungen der Kabinenpassagiere ausgelöst werden. Aus diesem Grund kann die vorliegende Erfindung vorsehen, dass die Fahrerkabine 18 bei Stillstand des Fahrzeugs 10 horizontal ausgerichtet und/oder stärker gedämpft (Dämpfer auf härteste Stufe gestellt) werden kann, bspw. durch eine automatische Niveauregulierung der Fahrerkabine 18 durch entsprechende Ansteuerung der Tragelemente 20, die im gezeigten Ausführungsbeispiel jeweils pneumatisch wirkende Federbälge aufweisen, wie dies anhand der schematischen Darstellung der Figur 2 verdeutlicht ist.

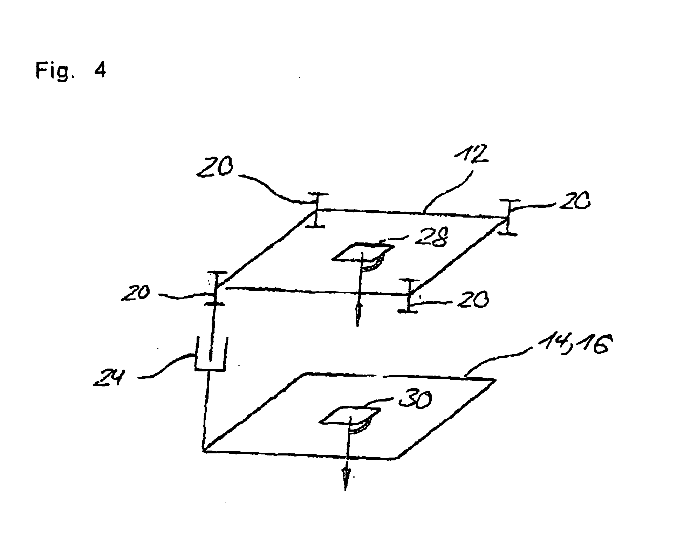

Die schematische Darstellung der Figur 2 verdeutlicht eine erste Ausgestaltung einer Fahrerhauslagerung für Nutzfahrzeuge, bei der zumindest an einem von mehreren Tragelementen 20 der Fahrerkabine 18 ein Wegsensor 24 vorgesehen ist, dessen Sensorsignal in einer Steuerschaltung (nicht dargestellt; vgl. Figur 4) mit den Signalen eines Neigungssensors 26 verarbeitet und zur Bildung eines Steuersignals für die fluidisch betätigbaren Tragelemente 20 herangezogen werden kann. Dargestellt ist in Figur 2 eine Fahrerhauslagerung, bei der die Fahrerkabine 18 über mindestens drei, vorzugsweise jedoch vier oder mehr Tragelemente 20 gegenüber dem Fahrgestellrahmen 12 abgestützt, gefedert und/oder gedämpft ist. Im gezeigten Ausführungsbeispiel reicht es aus, wenn nur ein Wegsensor 24 vorhanden ist, da aus den Signalen des einen Wegsensors 24 sowie des einen Neigungssensors 26 am Fahrerhausboden der Fahrerkabine 18 ein Signal für die Neigung des Fahrerhauses 18 gegenüber einer horizontalen Nulllage herleitbar ist. Mittels der Fahrerhauslagerung gemäß Figur 2 kann eine Neigung des Fahrgestellrahmens 12 aufgrund einer geneigten Fahrbahn und/oder aufgrund einer starken Beladung des Nutzfahrzeugs im Rahmen des maximalen Hubs der Tragelemente 20 und damit in gewissen Grenzen ausgeglichen werden, so dass trotz geneigtem Fahrgestellrahmen 12 eine weitgehend horizontale Ausrichtung der Fahrerkabine 18 ermöglicht ist.

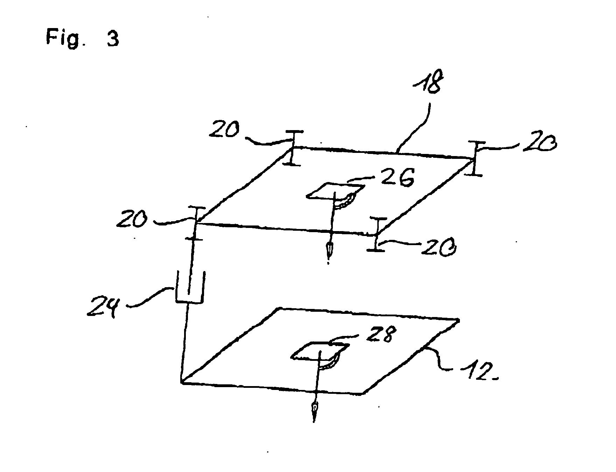

Die schematische Darstellung der Figur 3 verdeutlicht eine zweite Variante einer Niveauregelung eines Nutzfahrzeugs 10, bei der neben dem ersten Neigungssensor 26 an der Fahrerkabine 18 auch am Fahrgestellrahmen 12 ein weiterer Neigungssensor 28 vorgesehen sein kann. Dieser dient zur Erfassung einer Neigung des Fahrgestellrahmens 12 gegenüber den Fahrzeugachsen 14 und 16 bzw. gegenüber einer Fahrbahn, so dass auch bei vollbeladenem Fahrzeug eine weitgehend horizontale Ausrichtung des Fahrgestellrahmens 12 über die zwischen den Achsen und dem Rahmen angeordneten Tragelemente (nicht dargestellt) ermöglicht ist.

Vorzugsweise wird die Fahrerkabine 18 während des Fahrbetriebs parallel zum Chassis bzw. Fahrgestellrahmen 12 ausgerichtet, was die Regelung insgesamt vereinfacht, da auf diese Weise auf eine permanente Niveauregelung verzichtet werden kann.

Die schematische Darstellung der Figur 4 verdeutlicht eine dritte Variante einer Niveauregelung eines Nutzfahrzeugs 10, bei der auch an der Vorderachse 14 und/oder an der Hinterachse 16 ein weiterer Neigungssensor 30 vorgesehen sein kann. Dieser dient zur Erfassung einer Neigung der Fahrzeugachsen 14, 16 gegenüber der Fahrbahn, um bei beladenem Fahrzeug eine weitgehend horizontale Ausrichtung des Fahrgestellrahmens 12 über die zwischen den Achsen und dem Rahmen angeordneten Tragelemente 20 zu ermöglichen.

Bei Nutzfahrzeugen 10 mit einer Blattfederung an der Vorderachse 14 vereinfacht sich die benötigte Sensorik, wodurch auch die gesamte Regelung einfacher und kostengünstiger dargestellt werden kann. Hierbei kann auf den Höhensensor bzw. Wegsensor 24 gänzlich verzichtet werden. Weiterhin notwendig bleibt mindestens ein Neigungssensor 26, der bei Fahrzeugen mit längerem Radstand zweckmäßigerweise durch einen weiteren Neigungssensor ergänzt werden kann, der bspw. an der Vorder- bzw. Hinterachse angeordnet sein kann.

Die in den Figuren 2 bis 4 schematisch dargestellten Varianten der Sensoranordnung können nahezu beliebig miteinander kombiniert werden. So kann es für die Realisierung einer für den Schlafmodus in ihrer Neigung einstellbaren Fahrerkabine 18 ausreichen, einen dort angeordneten ersten Neigungssensor 26 mit einem zwischen Fahrerkabine 18 und Nutzfahrzeugrahmen 12 angeordneten Wegsensor 24 zu kombinieren. Dieser Wegsensor 24 kann wahlweise an einem geeigneten Einbauort zwischen Rahmen 12 und Kabine 18 platziert oder einem der Tragelemente 20 zugeordnet sein, die zur gefederten und/oder gedämpften Aufhängung und Abstützung der Fahrerkabine 18 dienen. Die Niveauregelung kann jedoch nicht nur beim Stillstand des Fahrzeugs, sondern auch bei dessen Fahrt genutzt werden, um einen gewissen Ausgleich bei einer seitlich oder in Fahrtrichtung geneigten Fahrbahn zu ermöglichen. Um hier ein permanentes Ausregeln und ggf. ein Aufschaukeln der Kabine 18 aufgrund einer unebenen Fahrbahn zu verhindern, ist es sinnvoll, die Regelung während der Fahrt mit einer gewissen Trägheit vorzunehmen, bspw. mit Hilfe eines sog. Fuzzy-Algorithmus.

Die erste Variante gemäß Figur 2 kann weiterhin zur Realisierung eines Nick- bzw. Wankausgleichs dienen, bei dem je nach erfasster Aufbaubewegung eine Verstellung von Dämpfungscharakteristiken der als Dämpfer fungierenden Tragelemente 20 bzw. von separaten Dämpfungselementen zwischen Rahmen 12 und Kabine 18 vorgenommen werden kann. Wird aus den Sensorsignalen der Sensoren 24 und 26 eine schnelle Aufbaubewegung aufgrund einer Fahrzeugbeschleunigung (Anfahren oder Bremsen) erkannt, so können die Dämpfungselemente in ihre härteste Dämpfungsstufe verstellt werden, um diese Aufbaubewegungen der Fahrerkabine 18 so weit wie möglich zu unterdrücken bzw. zu dämpfen.

in gleicher Weise kann mittels der Steueranordnung gemäß Figur 3 sowohl eine verbesserte Niveauregelung der Fahrerkabine 18 und/oder des Fahrzeugrahmens 12 während des Stillstandes des Fahrzeugs als auch während dessen Fahrt realisiert werden. Der zusätzliche Neigungssensor 28 am Rahmen 12 ermöglicht eine Erkennung einer Neigung des Fahrzeugrahmens 12 gegenüber einer horizontalen Nulllage. Diese Neigung kann entweder aus einer starken bzw. einer ungleichförmigen Beladung, aus einer gegenüber der Horizontalen geneigten Fahrbahn oder aus einer Kombination dieser beiden Faktoren resultieren. Auch bei dieser Variante kann es wiederum sinnvoll sein, die Sensorsignale der drei Sensoren 24, 26 und 28 sowohl zur Realisierung eines Schlafmodus für die Fahrerkabine 18 als auch für eine Niveauregelung während der Fahrt zu nutzen. Darüber hinaus kann der zusätzliche Neigungssensor 28 dazu verwendet werden, um den Nick- bzw. Wankausgleich während der Fahrt des Fahrzeugs zu verbessern, indem je nach erfassten Bewegungen des Rahmens 12 eine Verstellung der Dämpfungscharakteristik der zwischen Rahmen 12 und den Fahrzeugachsen 14, 16 angeordneten Dämpfungselemente erfolgt.

Eine noch detailliertere Information über die Rahmen- und Achsenneigungen gegenüber der horizontalen und/oder geneigten Fahrbahn kann eine Sensoranordnung gemäß Figur 4 liefern, da hierbei zumindest ein zusätzlicher Neigungssensor 30 an einer oder an mehreren der Fahrzeugachsen 14, 16 angeordnet ist und somit eine unmittelbare Information über die Fahrbahnneigung liefern kann. Während der am Fahrzeugrahmen 12 angeordnete Neigungssensor 28 eine überlagerte Information liefert, die aus einer geneigten Fahrbahn und/oder aus einem Beladungszustand resultieren kann, ermöglicht ein an einer Fahrzeugachse 14, 16 angeordneter Neigungssensor 30 eine unmittelbare Aussage, ob die Fahrbahn seitlich und/oder in Fahrtrichtung geneigt ist oder nicht. Bei der Sensoranordnung gemäß Figur 4 kann somit ohne zusätzlichen Rechenaufwand eine unmittelbare Information über den aktuellen Beladungszustand des Nutzfahrzeugs gewonnen werden, woraus sich eine sinnvolle Ansteuerung zur Druckbeaufschlagung der zwischen Achsen 14, 16 und Rahmen 12 angeordneten Tragelemente gewinnen lässt.

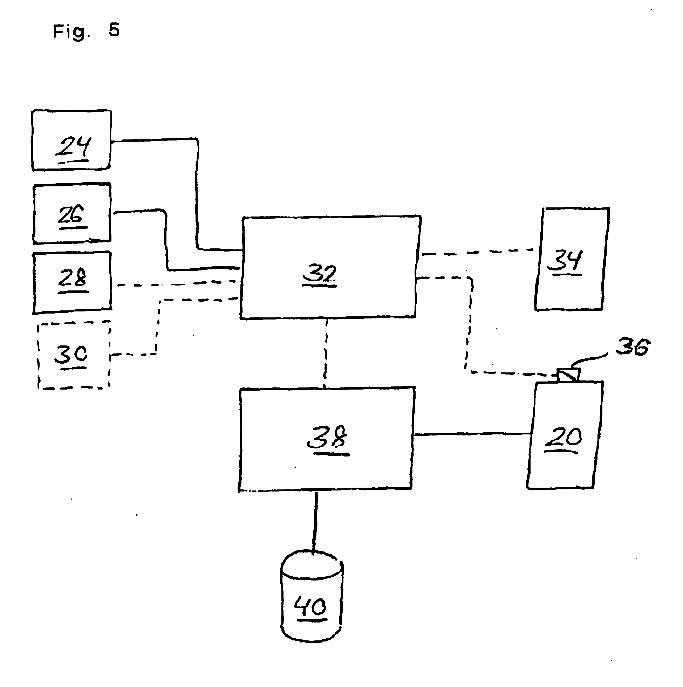

Die schematische Darstellung der Figur 5 verdeutlicht eine Variante einer Steuerschaltung zur horizontalen Ausrichtung der Fahrerkabine 20 und/oder des Fahrzeugrahmens 12 bei geneigter Fahrbahn und/oder bei beladenem Fahrzeug 10. Mittels der zentralen Steuereinrichtung 32 werden die Signale des mindestens einen Wegsensors 24 sowie des mindestens einen Neigungssensors 26 ausgewertet und zur Ansteuerung von Tragelementen 20 und/oder von Dämpfungselementen 34 verwendet. Wenn im vorliegenden Zusammenhang allgemein von Tragelementen 20 und von Dämpfungselementen 34 die Rede ist, so sind damit sowohl die Aufhängungselemente zwischen Fahrerkabine 18 und Rahmen 12 als auch die zwischen Rahmen 12 und Achsen 14, 16 gemeint. Je nach gewünschter Ausführungsvariante können alle diese Elemente oder auch nur Teile davon variabel angesteuert werden.

Jeder der Tragbälge 20 weist eine separate Steuereinheit 36 auf, mit der jeweils die Druckbeaufschlagung gesteuert wird. Die Steuereinheiten 36 der Tragbälge 20 sind über elektrische Steuerleitungen (unterbrochene Linie) mit der zentralen Steuereinrichtung 32 gekoppelt, die je nach verwendetem Niveauregulierungsalgorithmus für eine Ansteuerung der Dämpfungselemente 34 (Wank- bzw. Nickausgleich) und/oder der Tragelemente 20 sorgt. Als derartige Steuereinheiten 36 eignen sich bspw. bekannte Magnetventile, bei denen hydraulische oder pneumatische Ventile mittels einer elektromagnetischen Ansteuerung geschaltet werden können.

Die zentrale Steuereinrichtung 32 steuert weiterhin einen Ventilblock 38 an, der bspw. eine Reihe von Magnetventilen aufweisen kann. Mit Hilfe des steuerbaren Ventilblocks 38 können die Umströmvorgänge der Druckluft zwischen den Tragelementen 20 und einer Druckluftversorgung 40 bzw. einem Luftvorrat variabel gesteuert werden. Die Leitungen zur Druckluftversorgung zwischen den Tragelementen 20, dem Ventilblock 38 und der Druckluftversorgung 40 sind in durchgezogenen Linien ausgeführt.

Wenn im Zusammenhang mit dem Ausführungsbeispiel gemäß Figur 5 generell von getrennten Tragelementen (20) und Dämpfungselementen (34) die Rede ist, so ist dies funktionell zu verstehen. Selbstverständlich können die Funktionen der Trag- und Dämpfungselemente auch jeweils in gemeinsamen Bauteilen zusammengefasst bzw. integriert sein. Dies können sogenannte Luftfeder-Dämpferelemente bzw. -module sein, wie sie bereits aus dem Stand der Technik bekannt sind.

## Patentansprüche

1. Anordnung zur Niveausteuerung und/oder -regelung einer Fahrerkabine (18) eines Nutzfahrzeugs (10) gegenüber einem Fahrzeugrahmen (12) und/oder gegenüber einem Fahrwerk, umfassend
- wenigstens einen zwischen Fahrzeugrahmen (12) und Fahrerkabine (18) angeordneten Wegsensor (24) zur Abstandsmessung und/oder zur Erfassung von Relativbewegungen,
- zwischen Fahrerkabine (18) und Fahrzeugrahmen (12) angeordneten fluidisch wirkenden Tragelementen (20), und
- eine Steuereinrichtung (32) zur variablen Ansteuerung der Tragelemente (20),
wobei die Signale des Wegsensors (24) zur Ansteuerung der Tragelemente (20) ausgewertet werden,
**dadurch gekennzeichnet,**
**dass** die Anordnung mindestens zwei Neigungssensoren (26; 28) umfasst, die eine Neigung der Fahrerkabine (18) und des Fahrzeugrahmens (12) gegenüber einer Nuillage erfassen und der Steuereinrichtung (32) als Messwert liefern, wobei jeweils ein Neigungssensor (26, 28) an der Fahrerkabine (18) und am Fahrzeugrahmen (12) vorgesehen ist.

2. Anordnung mach Anspruch 1, **dadurch gekennzeichnet, dass** die fluidisch wirkenden Tragelemente (20) mittels einer automatischen Steuerung in ihrem Hub einstellbar sind.

3. Anordnung nach einem der Ansprüche 1 und 2, **dadurch gekennzeichnet, dass** die Niveauregelung der Fahrerkabine (18) gegenüber dem Fahrzeugrahmen (12) einen Niveauausgleich bei stillstehendem Fahrzeug (10) vorsieht.

4. Anordnung nach einem der Ansprüche 1 bis 3, **dadurch gekennzeichnet, dass** die Niveauregulierung des Fahrzeugrahmens (12) gegenüber dem Fahrwerk einen Ausgleich von unterschiedlichen Beladungszuständen des Fahrzeugs (10) vorsieht.

5. Anordnung nach einem der vorangehenden Ansprüche, **dadurch gekennzeichnet, dass** die Niveauregulierung der Fahrerkabine (18) und/oder des Fahrzeugrahmens (12) einen Wank- und/oder Nickausgleich während der Fahrt vorsieht.

6. Anordnung nach einem der vorangehenden Ansprüche, **dadurch gekennzeichnet, dass** die Niveauregulierung der Fahrerkabine (18) und/oder des Fahrzeugrahmens (12) eine Aufbau- bzw. Rahmenniveauregelung bei unebener bzw. geneigter Fahrbahn vorsieht.

7. Anordnung nach einem der vorangehenden Ansprüche, **dadurch gekennzeichnet, dass** jeweils ein Wegsensor (24) an wenigstens einem Tragelement (20) der Fahrerkabine (18) sowie an wenigstens einer Achse (14, 16) des Fahrzeugs (10) angeordnet ist.

8. Anordnung nach einem der vorangehenden Ansprüche, **dadurch gekennzeichnet, dass** jeweils ein Wegsensor (24) an einer Vorderachse (14) und an einer Hinterachse (16) des Fahrzeugs (10) angeordnet ist.

9. Verfahren zur Niveausteuerung und/oder -regelung einer Fahrerkabine (18) eines Nutzfahrzeugs (10) gegenüber einem Fahrzeugrahmen (12) und/oder gegenüber einem Fahrwerk, bei dem die Signale wenigstens eines zwischen Fahrzeugrahmen (12) und Fahrerkabine (18) angeordneten Wegsensors (24) zur Abstandsmessung und/oder zur Erfassung von Relativbewegungen mittels einer Steuereinrichtung (32) zur variablen Ansteuerung von zwischen Fahrerkabine (18) und Fahrzeugrahmen (12) angeordneten fluidisch wirkenden Tragelementen (20) ausgewertet werden, **dadurch gekennzeichnet, dass** die Signale von mindestens zwei Neigungssensoren (26, 28) ausgewertet werden, die eine Neigung der Fahrerkabine (18) und des Fahrzeugrahmens (12) gegenüber einer Nulllage erfassen und der Steuereinrichtung (32) als Messwerte liefern, wobei jeweils ein Neigungssensor (26, 28) an der Fahrerkabine (18) und am Fahrzeugrahmen (12) vorgesehen ist.

10. Verfahren nach Anspruch 9, **dadurch gekennzeichnet, dass** die Niveauregelung der Fahrerkabine (18) gegenüber dem Fahrzeugrahmen (12) einen Niveauausgleich bei stillstehendem Fahrzeug (10) vorsieht.

11. Verfahren nach Anspruch 9 oder 10, **dadurch gekennzeichnet, dass** die Niveauregulierung des Fahrzeugrahmens (12) gegenüber dem Fahrwerk einen Ausgleich von unterschiedlichen Beladungszuständen des Fahrzeugs (10) vorsieht.

12. Verfahren nach einem der Ansprüche 9 bis 11, **dadurch gekennzeichnet, dass** die Niveauregulierung der Fahrerkabine (18) und/oder des Fahrzeugrahmens (12) einen Wank- und/oder Nickausgleich während der Fahrt vorsieht.

## Claims

1. Arrangement for the height control or regulation of a driver cab (18) of a utility vehicle (10) with regard to a vehicle frame (12) and/or with regard to a chassis, including
- at least one displacement sensor (24) arranged between the vehicle frame (12) and the driver cab (18) for measuring clearances and/or detecting relative movements,
- fluidically effective load-bearing elements (20) that are arranged between the driver cab (18) and the vehicle frame (12),
- and a control device (32) for the variable triggering of the load-bearing elements (20),
whereby the signals of the displacement sensor (24) for triggering the load-bearing elements (20) are evaluated,
**characterised in that**
the arrangement includes at least two tilt sensors (26; 28), which sensors detect any tilt of the driver cab (18) and the vehicle frame (12) in relation to a zero position and supply this tilt to the control device (32) as a measured value, whereby one tilt sensor (26, 28) is fitted on the driver cab (18) and one tilt sensor is fitted on the vehicle frame (12) respectively.

2. Arrangement in accordance with claim 1, **characterised in that** the fluidically effective load-bearing elements (20) can be adjusted with regard to their lift by means of an automatic controller.

3. Arrangement in accordance with one of claims 1 and 2, **characterised in that** the height regulation of the driver cab (18) with regard to the vehicle frame (12) provides a height compensation function when the vehicle (10) is at a standstill.

4. Arrangement in accordance with one of claims 1 to 3, **characterised in that** the height regulation of the vehicle frame (12) with regard to the chassis provides a compensation for various load states on the vehicle (10).

5. Arrangement in accordance with one of the claims described above, **characterised in that** the height regulation of the driver cab (18) and/or of the vehicle frame (12) provides a compensation for rolling and pitching movements when driving.

6. Arrangement in accordance with one of the claims described above, **characterised in that** the height regulation of the driver cab (18) and/or of the vehicle frame (12) provides a body or frame height regulation function on uneven or tilted road surfaces.

7. Arrangement in accordance with one of the claims described above, **characterised in that** in each case one displacement sensor (24) is arranged on at least one load-bearing element (20) of the driver cab (18) and on at least one axle (14, 16) of the vehicle (10).

8. Arrangement in accordance with one of the claims described above, **characterised in that** in each case one displacement sensor (24) is arranged on a front axle (14) and on a rear axle (16) of the vehicle (10).

9. Procedure for the height control and/or regulation of a driver cab (18) of a utility vehicle (10) with regard to a vehicle frame (12) and/or with regard to a chassis, in which procedure the signals of at least one displacement sensor (24) arranged between the vehicle frame (12) and the driver cab (18) for measuring clearances and/or detecting relative movements are evaluated using a control device (32) for the purpose of the variable triggering of fluidically effective load-bearing elements (20) arranged between the driver cab (18) and the vehicle frame (12), **characterised in that** the signals of at least two tilt sensors (26, 28) are evaluated, which tilt sensors detect any tilt of the driver cab (18) and of the vehicle frame (12) in relation to a zero position and supply this tilt to the control device (32) as measured values, whereby one tilt sensor (26, 28) is fitted on the driver cab (18) and one tilt sensor is fitted on the vehicle frame (12) respectively.

10. Procedure in accordance with claim 9, **characterised in that** the height regulation of the driver cab (18) with regard to the vehicle frame (12) provides a height compensation function when the vehicle (10) is at a standstill.

11. Procedure in accordance with claim 9 or 10, **characterised in that** the height regulation of the vehicle frame (12) with regard to the chassis provides a compensation for various load states on the vehicle (10).

12. Procedure in accordance with one of claims 9 to 11, **characterised in that** the height regulation of the driver cab (18) and/or of the vehicle frame (12) provides a compensation for rolling and pitching movements when driving.

## Revendications

1. Structure relative à la commande et/ou la régulation de l'assiette d'une cabine (18) d'un véhicule industriel (10) par rapport à un cadre de véhicule (12) et/ou par rapport à un train de roulement, comprenant
- au moins un capteur de course (24) disposé entre le cadre de véhicule (12) et la cabine (18) pour mesurer l'écart et/ou saisir les mouvements relatifs,
- des éléments porteurs à effet liquide (20) disposés entre la cabine (18) et le cadre de véhicule (12),
- et un dispositif de commande (32) servant au pilotage variable des éléments porteurs (20),
auquel cas les signaux du capteur de course (24) sont analysés pour piloter les éléments porteurs (20),
**caractérisée en ce que**
la structure comprend au moins deux capteurs d'inclinaison (26 ; 28) qui saisissent une inclinaison de la cabine (18) et du cadre du véhicule (12) par rapport à une position zéro et la fournissent au dispositif de commande (32) comme valeur de mesure, auquel cas un capteur d'inclinaison (26, 28) est prévu respectivement sur la cabine (18) et sur le cadre de véhicule (12).

2. Structure selon la revendication 1, **caractérisée en ce que** les éléments porteurs à effet liquide (20) peuvent être réglés dans leur course au moyen d'une commande automatique.

3. Structure selon l'une des revendications 1 et 2, **caractérisée en ce que** la régulation de l'assiette de la cabine (18) par rapport au cadre de véhicule (12) prévoit une compensation de l'assiette lorsque le véhicule (10) est immobilisé.

4. Structure selon l'une des revendications 1 à 3, **caractérisée en ce que** la régulation de l'assiette du cadre de véhicule (12) par rapport au train de roulement prévoit une compensation des différents états de chargement du véhicule (10).

5. Structure selon l'une des revendications mentionnées précédemment, **caractérisée en ce que** la régulation de l'assiette de la cabine (18) et/ou du cadre de véhicule (12) prévoit une compensation du roulis et/ou du tangage pendant la conduite.

6. Structure selon l'une des revendications mentionnées précédemment, **caractérisée en ce que** la régulation de l'assiette de la cabine (18) et/ou du cadre de véhicule (12) prévoit une régulation de l'assiette de la carrosserie et/ou du cadre en cas de chaussée accidentée ou inclinée.

7. Structure selon l'une des revendications mentionnées précédemment, **caractérisée en ce qu'**un capteur de course (24) est disposé respectivement au moins au niveau d'un élément porteur (20) de la cabine (18) ainsi qu'au moins au niveau d'un essieu (14, 16) du véhicule (10).

8. Structure selon l'une des revendications mentionnées précédemment, **caractérisée en ce qu'**un capteur de course (24) est disposé respectivement au niveau d'un essieu avant (14) et d'un pont arrière (16) du véhicule (10).

9. Procédé pour commander et/ou réguler l'assiette d'une cabine (18) d'un véhicule industriel (10) par rapport à un cadre de véhicule (12) et/ou par rapport à un train de roulement, selon lequel les signaux d'au moins un capteur de course (24) disposé entre le cadre de véhicule (12) et la cabine (18) pour mesurer l'écart et/ou saisir les mouvements relatifs au moyen d'un dispositif de commande (32) servant au pilotage variable d'éléments porteurs à effet liquide (20) disposés entre la cabine (18) et le cadre de véhicule (12) sont analysés, **caractérisé en ce que** les signaux d'au moins deux capteurs d'inclinaison (26, 28) sont analysés et ces capteurs d'inclinaison (26, 28) saisissent une inclinaison de la cabine (18) et du cadre de véhicule (12) par rapport à une position zéro et la fournissent au dispositif de commande (32) comme valeurs de mesure, auquel cas un capteur d'inclinaison (26, 28) est prévu respectivement au niveau de la cabine (18) et du cadre de véhicule (12).

10. Procédé selon la revendication 9, **caractérisé en ce que** la régulation de l'assiette de la cabine (18) par rapport au cadre de véhicule (12) prévoit une compensation de l'assiette lorsque le véhicule (10) est immobilisé.

11. Procédé selon la revendication 9 ou 10, **caractérisé en ce que** la régulation de l'assiette du cadre de véhicule (12) par rapport au train de roulement prévoit une compensation des différents états de chargement du véhicule (10).

12. Procédé selon l'une des revendications 9 à 11, **caractérisé en ce que** la régulation de l'assiette de la cabine (18) et/ou du cadre de véhicule (12) prévoit une compensation du roulis et/ou du tangage pendant la conduite.
